# EUROPÄISCHE PATENTSCHRIFT

(11) **EP 2 957 027 B1**
(45) Veröffentlichungstag und Bekanntmachung des Hinweises auf die Patenterteilung: **18.04.2018**
(21) Anmeldenummer: 14701290.0
(22) Anmeldetag: 23.01.2014
(51) Int. Cl.: H02K 19/10, H02K 1/24, H02K 29/03

(54) **ELEKTROMASCHINE MIT ROTOR**
ELECTRIC MACHINE HAVING A ROTOR
MACHINE ÉLECTRIQUE À ROTOR

(30) Priorität: 13.02.2013 DE 102013002404
(43) Veröffentlichungstag der Anmeldung: 23.12.2015
(60) Teilanmeldung: 17000926.0
(73) Patentinhaber: Sew-Eurodrive GmbH & Co. KG, 76646 Bruchsal (DE)
(72) Erfinder: KRÄMER, Andre, 76646 Bruchsal (DE)
(86) Internationale Anmeldenummer: PCT/EP2014/000166
(87) Internationale Veröffentlichungsnummer: WO 2014/124729

(56) Entgegenhaltungen:
- GB-A- 1 292 111
- US-A- 4 074 160
- US-A1- 2003 111 927

## Beschreibung

Die Erfindung betrifft eine Elektromaschine mit Rotor.

Aus der US 5 818 140 A ist ein Reluktanzmotor bekannt. Dabei weist der Stator eine Anzahl von Statornuten n_S auf. Der Rotor weist ein Blechpaket auf, das in Rotorachsrichtung paketiert ist. Jedes Einzelblech weist Ausnehmungen auf, die an einer Umfangsposition einen minimalen Radialabstand aufweisen, wobei in und entgegen der Umfangsrichtung von dieser Umfangsposition des radialen Minimums beabstandet radiale Maxima ausgeprägt sind, die einen derart großen Radialabstand aufweisen, dass die radiale Wandstärke für die magnetischen Flusslinien vernachlässigbare Auswirkungen haben. Somit bilden diese Ausnehmungen bezüglich ihrer Wirkung auf das Magnetfeld Nuten. Diese Nuten erstrecken sich in Richtung des Stapels, also in axialer Richtung.

Die Anzahl der auf diese Weise gebildeten Nuten am Rotor ist größer als 6, unterscheidet sich von der Anzahl der Statornuten, wobei der Unterschied unterschiedlich ist von der Zahl zwei. Außerdem ist die Anzahl der Statornuten ein ganzzahliges Vielfaches der Anzahl der Nuten am Rotor.

Des Weiteren sind die Nuten am Rotor voneinander regelmäßig beabstandet. Dabei ist in Umfangsrichtung eine diskrete Drehsymmetrie von 90° vorhanden.

**Aus der Figur 4a der** US 4 074 160 A **ist ein Reluktanzmotor bekannt, bei dem die Oberflächen-Mündungspunkte der Flusssperren der Pole gleichartige Punktbilder darstellen. Denn bei Einteilung des Umfangs in Umfangswinkelbereiche von 360°/(2p), also 90°, von denen zumindest einer am Umfangswinkelwert einer Symmetrieebene des Blechpakets beginnt, sind die Punktbilder des Umfangswinkelbereichs durch eine Drehung um 90° in Deckung bringbar mit dem Punktbild des in Umfangsrichtung benachbarten Umfangswinkelbereichs.**

**Aus dem Fachbuch "**Elektrische Maschinen und Antriebe - Grundlagen und Betriebsverhalten", Autor: Andreas Binder, Verlag Springer, ISBN: 978-3-540-71849-9 sind auf Seite 805 **in Bild 10.2.7-1 Flusssperren bekannt, die auch als Flussbarrieren bezeichnet werden.**

**Aus der** US 2003/111927 A1 **ist ein Synchronmotor bekannt.**

**Aus der** GB 1 292 111 A **ist eine dynamoelektrische Maschine bekannt.**

Der Erfindung liegt daher die Aufgabe zugrunde, eine Elektromaschine mit Rotor weiterzubilden, wobei die Drehmomentwelligkeit verringert werden soll.

Erfindungsgemäß wird die Aufgabe bei der Elektromaschine mit Rotor nach den in Anspruch 1 angegebenen Merkmalen gelöst.

**Wichtige Merkmale bei der Elektromaschine mit Rotor nach Anspruch 1 sind, dass der Rotor ein Blechpaket aus Einzelblechteilen aufweist,**

**insbesondere wobei die Einzelblechteile gestapelt angeordnet sind, insbesondere in Rotorachsrichtung paketiert sind, insbesondere stanzpaketiert sind,**
**wobei an einem, insbesondere jeweiligen, Einzelblechteil Flusssperren ausgebildet sind,**

**insbesondere wobei die Flusssperren durch jeweilige Ausnehmungen und/oder im Betrieb der Elektromaschine mit Nennstrom gesättigte Stegbereiche des Einzelblechteils gebildet sind,**
**wobei die Flusssperren an der Oberfläche, insbesondere radial äußeren Oberfläche, des Einzelblechteils münden, insbesondere nach radial außen, insbesondere in den Luftspalt zwischen dem Rotor und einem diesen Rotor aufnehmenden Stator,**
**wobei der Schwerpunkt des jeweiligen zugehörigen Mündungsbereichs der jeweiligen Flusssperre als jeweiliger Oberflächen-Mündungspunkt bezeichenbar ist,**

**insbesondere wobei das Einzelblechteil eine Punktsymmetrie zur Rotorachse aufweist,**
**wobei das Einzelblechteil Symmetrieebenen aufweist, welche die Rotorachse enthalten,**
**wobei der Umfang aus (2 * p) Umfangswinkelbereichen zusammengesetzt ist, wobei jeder der Umfangswinkelbereiche einen Winkelbereich von 360° / (2 * p) überdeckt und zumindest einer der Umfangswinkelbereiche einseitig von einer der Symmetrieebenen berandet ist,**
**wobei die Anordnung der Oberflächen-Mündungspunkte eine Punktsymmetrie aufweist,**
**wobei die Anordnung der Oberflächen-Mündungspunkte in einem der Umfangswinkelbereiche durch Drehung um die Rotorachse um einen Winkelbetrag von k * 360° / (2 * p) nicht in Deckung bringbar ist mit der Anordnung der Oberflächen-Mündungspunkte in einem anderen der Umfangswinkelbereiche,**
**wobei k eine ganze Zahl ist, die größer als 0 und kleiner als p ist.**

**Von Vorteil ist dabei, dass einerseits eine Punktsymmetrie vorliegt, also das Punktbild der Oberflächen-Mündungspunkte punktsymmetrisch zum Schnittpunkt der Rotorachse mit der Einzelblechteilebene ist. Andererseits ist eine Asymmetrie vorhanden, weil bei Drehung um eine Polteilung oder um zumindest weniger als p Polteilungen, wobei p die Polpaarzahl ist, das Punktbild der Oberflächen-Mündungspunkte der ersten Polteilung nicht in Deckung bringbar ist mit dem Punktbild einer anderen Polteilung, die nicht die punktsymmetrisch gegenüberliegende Polteilung ist.**

Bei einer vorteilhaften Ausgestaltung weist der Rotor ein Blechpaket aus Einzelblechteilen auf,
insbesondere wobei die Einzelblechteile gestapelt angeordnet sind, insbesondere in Rotorachsrichtung paketiert sind, insbesondere stanzpaketiert sind,
**wobei** am Einzelblechteil in Umfangsrichtung hintereinander Pole, insbesondere Reluktanzpole, insbesondere 2*p Pole, ausgebildet sind, wobei jeder Pol einen Winkelbereich, also die Polteilung, überdeckt,
insbesondere wobei der Winkelbereich jeweils gleich ist, insbesondere 360° / (2*p) beträgt, wobei p die Anzahl der Polpaare ist und p eine ganze Zahl ist,
wobei das Einzelblechteil in jedem der Winkelbereiche eine oder mehrere Ausnehmungen aufweist, also jeder der Pole eine oder mehrere Ausnehmungen aufweist,
wobei jedem Pol punktsymmetrisch gegenüberliegend ein gleichartig geformter Pol angeordnet ist und wobei die anderen Pole zu ihm unterschiedlich geformt sind,
insbesondere wobei jeder Pol zu jedem anderen, nicht punktsymmetrisch zu dem jeweiligen Pol angeordneten Pol unterschiedlich geformt ist und gleichartig geformt ist zu dem punktsymmetrisch zu dem jeweiligen Pol angeordneten Pol.

**Dabei ist die Polform auf das magnetische Erscheinungsbild bezogen und somit die Form des jeweiligen Pols entscheidend bestimmt durch das Punktbild der Oberflächen-Mündungspunkte der Flusssperren.**

Von Vorteil ist dabei, dass die Drehmomentwelligkeit reduziert ist. Denn die bei der Drehbewegung des Rotors relativ zum Stator von den Rotor nuten in Verbindung mit den Statornuten erzeugten Oberwellen im Leitwert und somit auch im Drehmoment der Maschine sind reduziert. Außerdem ist der Rotor ausgewuchtet, insbesondere bezüglich des Trägheitsmoments. Denn bis auf die sich gegenüberliegenden Pole, also diejenigen Pole die in sich übergehen durch gedachte Drehung eines der Pole um 180° um die Rotorachse, sind die sonstigen Pole asymmetrisch. Es gibt also keinen Verdrehwinkel, bei dem sie übergehen in einen anderen Pol. Nur bei Drehung um 180° gehen sie jeweils in den ihnen jeweils gegenüberliegenden Pol.

**Bei einer vorteilhaften Ausgestaltung weist** der Rotor ein Blechpaket aus Einzelblechteilen aufweist,
insbesondere wobei die Einzelblechteile gestapelt angeordnet sind, insbesondere in Rotorachsrichtung paketiert sind, insbesondere stanzpaketiert sind,
**wobei** am Einzelblechteil in Umfangsrichtung hintereinander Pole, insbesondere Reluktanzpole, insbesondere 2*p Pole, ausgebildet sind, wobei jeder Pol einen Winkelbereich, also die Polteilung, überdeckt,
insbesondere der Winkelbereich 360° /(2*p) beträgt, wobei p die Anzahl der Polpaare ist und p eine ganze Zahl ist,
wobei das Einzelblechteil in jedem der Winkelbereiche eine oder mehrere Ausnehmungen aufweist, also jeder der Pole eine oder mehrere Ausnehmungen aufweist,
wobei die oder die mehreren Ausnehmungen der jeweils punktsymmetrisch zueinander angeordneten Pole punktsymmetrisch zueinander ausgeführt sind,
wobei die eine oder mehrere Ausnehmungen eines Pols nur gleichartig geformt sind zur Ausnehmung oder Ausnehmungen des punktsymmetrisch zu dem Pol angeordneten Pols und/oder durch Drehung um einen Winkelbetrag nur in Deckung bringbar ist oder sind zur Ausnehmung oder Ausnehmungen des punktsymmetrisch zu dem Pol angeordneten Pols,
insbesondere also jeder Pol zu jedem anderen, nicht jeweils punktsymmetrisch angeordneten Pol unterschiedlich geformt ist, und/oder nicht durch Drehung um einen Winkelbetrag in Deckung bringbar sind mit der Ausnehmung oder den Ausnehmungen eines anderen nicht punktsymmetrisch angeordneten Pols.

Von Vorteil ist dabei, dass die Drehmomentwelligkeit reduziert ist. Denn die bei der Drehbewegung des Rotors relativ zum Stator von den Rotor nuten in Verbindung mit den Statornuten erzeugten Oberwellen im Leitwert und somit auch im Drehmoment der Maschine sind reduziert. Außerdem ist der Rotor ausgewuchtet, insbesondere bezüglich des Trägheitsmoments. Denn bis auf die sich gegenüberliegenden Pole, also diejenigen Pole die in sich übergehen durch gedachte Drehung eines der Pole um 180° um die Rotorachse, sind die sonstigen Pole asymmetrisch. Es gibt also keinen Verdrehwinkel, bei dem sie übergehen in einen anderen Pol. Nur bei Drehung um 180° gehen sie jeweils in den ihnen jeweils gegenüberliegenden Pol.

Bei einer vorteilhaften Ausgestaltung weist jeder Pol zumindest eine Flusssperre auf, die durch die Ausnehmung gebildet ist,
insbesondere wobei die Flusssperre eine magnetische *Nut aufweist.* Von Vorteil ist dabei, dass eine einfache Fertigung des Einzelblechteils durch Stanzen ausführbar ist.

Bei einer vorteilhaften Ausgestaltung ist der von jedem Pol überdeckte Winkelbereich betragsgleich. Von Vorteil ist dabei, dass eine einfache Herstellung ermöglicht ist.

Bei einer vorteilhaften Ausgestaltung weist jede der Ausnehmungen in Umfangsrichtung bei einer erste Winkelposition einen kleinsten Radialabstand auf und bei einer in Umfangsrichtung zur ersten Winkelposition beabstandeten zweiten Winkelposition einen, insbesondere lokal, maximalen Radialabstand und bei einer entgegen der Umfangsrichtung zur ersten Winkelposition beabstandeten dritten Winkelposition einen, insbesondere lokal, maximalen Radialabstand,
wobei eine erste Winkeldifferenz dem Winkelabstand vom Beginn des Winkelbereichs zur zweiten Winkelposition entspricht,.
wobei eine zweite Winkeldifferenz dem Winkelabstand vom Ende des Winkelbereichs zur dritten Winkelposition entspricht. Von Vorteil ist dabei, dass die radiale Restwandstärke des Einzelblechteils im Bereich der Maxima sehr gering ist und somit im Wesentlichen eine auf Magnetfeldlinien wirkende Nut in diesen Bereichen jeweils angeordnet ist.

Bei einer vorteilhaften Ausgestaltung ist die erste Winkeldifferenz eines Pols stets unterschiedlich zur ersten Winkeldifferenz des in oder entgegen der Umfangsrichtung benachbarten Pols
und/oder
die zweite Winkeldifferenz eines Pols ist stets unterschiedlich zur zweiten Winkeldifferenz des in oder entgegen der Umfangsrichtung benachbarten Pols. Von Vorteil ist dabei, dass

Bei einer vorteilhaften Ausgestaltung sind in Umfangsrichtung vier Pole hintereinander angeordnet. Von Vorteil ist dabei, dass die Pole nicht gleichartig ausgeführt sind und somit jeweils unterschiedlich sind.

Bei einer vorteilhaften Ausgestaltung ist das Blechpaket in axialer Richtung aus einer Anzahl m von Segmenten zusammengesetzt, wobei die Segmente gleichartig ausgeführt sind, aber jedes Segment zum axial benachbarten Segment einen in Umfangsrichtung vorgesehenen Verdrehwinkelbetrag von 360° / (m * n_S) aufweist,
wobei n_S die Anzahl der in Umfangsrichtung hintereinander angeordneten Statornuten ist. Von Vorteil ist dabei, dass eine weiter verringerte Drehmomentwelligkeit erreichbar ist.

Bei einer vorteilhaften Ausgestaltung weist jeder Pol mehrere durch jeweilige Ausnehmungen gebildete Flusssperren auf. Von Vorteil ist dabei, dass eine höhere Anzahl von Rotornuten einfach herstellbar ist.

Bei einer vorteilhaften Ausgestaltung weisen unterschiedliche Pole eine unterschiedliche Anzahl an Flusssperren und/oder von Ausnehmungen auf. Von Vorteil ist dabei, dass die Pole nicht gleich sind und somit die Drehmomentwelligkeit reduziert ist.

Bei einer vorteilhaften Ausgestaltung weisen die Pole eine oder mehrere weitere Ausnehmungen auf, die bei allen Polen gleichartig ausgebildet sind. Von Vorteil ist dabei, dass eine einfache Herstellung ermöglicht ist.

Bei einer vorteilhaften Ausgestaltung weist der Stator der Elektromaschine eine in Umfangsrichtung hintereinander angeordnete und jeweils einzeln bewickelte Zähne auf. Von Vorteil ist dabei, dass ein solcher mit Einzelzahnwicklung ausgestatteter Stator einfach herstellbar ist und einen hohen Wirkungsgrad erreichbar macht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

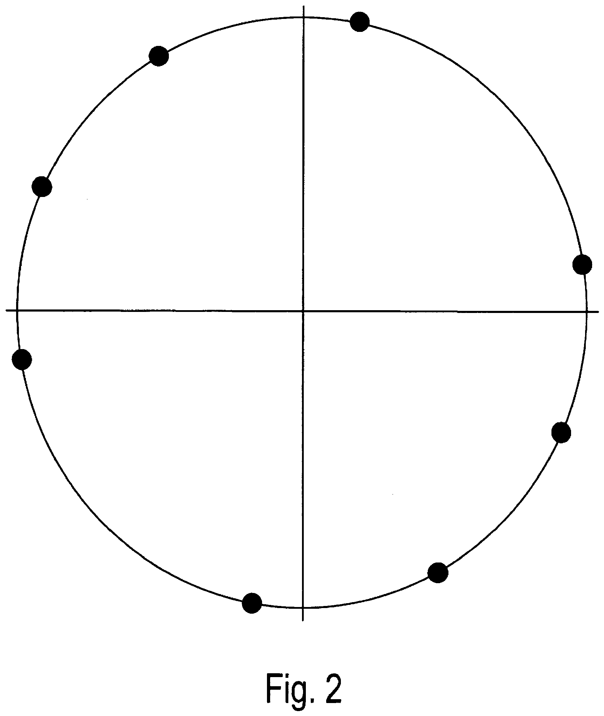

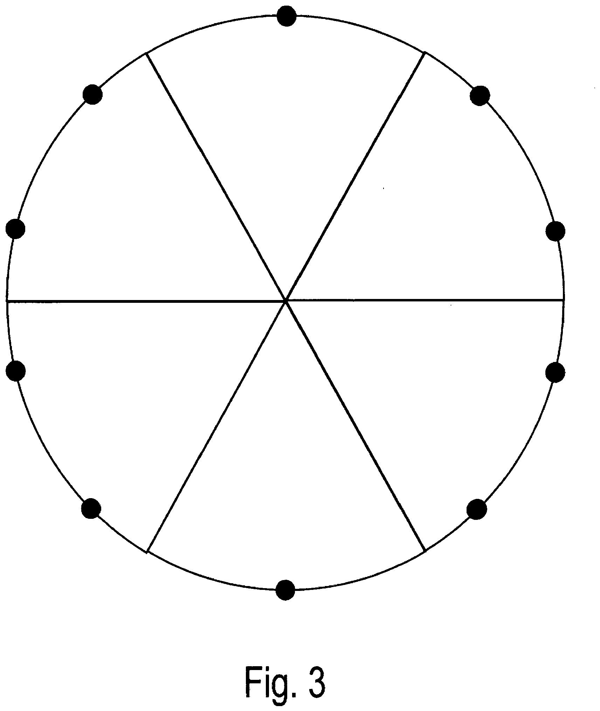

Die Erfindung wird nun anhand von Abbildungen näher erläutert:

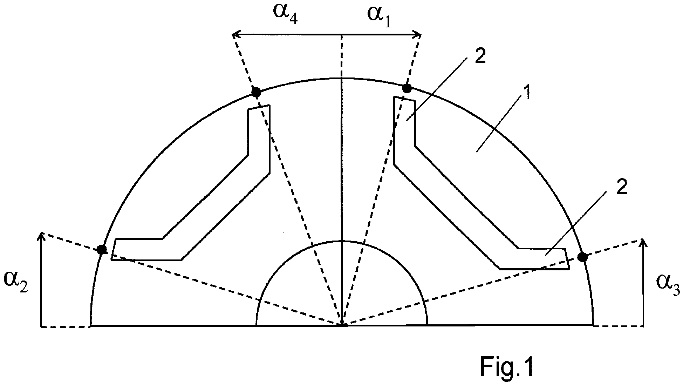

In der Figur 1 ist ein Einzelblechteil 1 des stanzpaketierten Blechpakets des erfindungsgemäßen Reluktanzmotors gezeigt.
**In der** **Figur 2** **ist sind die zugehörigen Oberflächen-Mündungspunkte der Flusssperren des Einzelblechteils 1 abstrakt dargestellt, wobei das Punktbild die Form der magnetischen Pole wesentlich bestimmt.**
**In** **Figur 3** **ist für ein anderes Ausführungsbeispiel, insbesondere eine sechspolige Maschine, wiederum das Punktbild der Oberflächen-Mündungspunkte der Flusssperren des Einzelblechteils 1 abstrakt dargestellt.**

Dabei sind die vorzugsweise zueinander gleichartig ausgeführten Einzelblechteile 1 in Rotorachsrichtung gestapelt angeordnet und/oder schweißverbunden.

Dabei weist der Stator eine Anzahl von Statornuten n_S auf. In Umfangsrichtung zwischen den Nuten ist ein jeweils mit einer Spule bewickelter Einzelzahn angeordnet. Jeder Einzelzahn weist einen pilzkopfartig verbreiterten Zahnkopf auf.

Der Rotor weist ein Blechpaket auf, das in Rotorachsrichtung paketiert ist. Jedes Einzelblechteil 1 weist Ausnehmungen 2 auf, die an einer Umfangsposition einen minimalen Radialabstand aufweisen, wobei in und entgegen der Umfangsrichtung von dieser Umfangsposition des radialen Minimums beabstandet radiale Maxima ausgeprägt sind, die einen derart großen Radialabstand aufweisen, dass die radiale Wandstärke für die magnetischen Flusslinien vernachlässigbare Auswirkungen haben. Somit bilden diese Ausnehmungen bezüglich ihrer Wirkung auf das Magnetfeld Nuten. Diese Nuten erstrecken sich in Richtung des Stapels, also in axialer Richtung.

Die Nuten bilden somit Flusssperren für die vom Stator erzeugten Magnetfeldlinien.

Die genannten radialen Restwandstärken sind also vernachlässigbar, so dass zwischen Stator und Rotor nicht nur ein Luftspalt vorhanden ist sondern im Blechpaket die Ausnehmungen als Flusssperren wirken. Das radial zwischen den Ausnehmungen des jeweiligen Einzelblechteils angeordnete Material des Einzelblechteils leitet die Magnetfeldlinien in Umfangsrichtung zwischen zwei Ausnehmungen entlang.

Der Rotor weist in Umfangsrichtung mehrere Pole auf, wobei jeder Pol innerhalb der des Winkelbereichs von 360° / (2*p), also innerhalb einer jeweiligen Polteilung, angeordnet ist, wobei p die Anzahl der Polpaare ist und eine ganze Zahl ist.

Die zur Rotorachse sich punktsymmetrisch gegenüberliegenden Pole sind gleichartig ausgeführt. Aber ansonsten sind die Pole voneinander unterschiedlich ausgeführt, gehen also nicht durch Drehung um einen Winkelbetrag um die Rotorachse ineinander über.

Somit ist der drehbar gelagerte Rotor bezüglich seines mechanischen Trägheitsmoments ausgewuchtet.

Die Umfangspositionen der Rotornuten sind durch die Winkelabstände der Rotornut, insbesondere der Mitte der Rotornut und/oder der Winkelposition des jeweils maximalen Radialabstands der Rotornut, zum Beginn oder Ende einer jeden Polteilung hin kennzeichenbar.

IN der Figur 1 ist der Winkelabstand der ersten Rotornut innerhalb der ersten Polteilung zum Beginn der ersten Polteilung mit α_3 bezeichnet, der Winkelabstand zwischen der zweiten Rotornut und dem Ende der ersten Polteilung mit α_1. Dabei dürfen α_1 und α_3 betragsgleich sein.

In der Figur 1 ist der Winkelabstand der ersten Rotornut innerhalb der zweiten Polteilung zum Beginn der zweiten Polteilung mit α_4 bezeichnet, der Winkelabstand zwischen der zweiten Rotornut und dem Ende der zweiten Polteilung mit α_2. Dabei dürfen α_2 und α_4 betragsgleich sein.

Jedoch ist erfindungsgemäß α_1, also der Winkelabstand innerhalb der ersten Polteilung zwischen der zweiten Rotornut und dem Ende der ersten Polteilung, unterschiedlich zu α_2, also zum Winkelabstand zwischen der zweiten Rotornut und dem Ende der zweiten Polteilung.

Zusätzlich oder alternativ ist erfindungsgemäß α_3, also der Winkelabstand innerhalb der ersten Polteilung zwischen der ersten Rotornut und dem Beginn der ersten Polteilung, unterschiedlich zu α_4, also zum Winkelabstand zwischen der ersten Rotornut und dem Beginn der zweiten Polteilung.

**Die Polteilung fällt hier jeweils mit einer Symmetrieebene des Einzelblechteils zusammen.**

Somit sind die Rotornuten der beiden in Umfangsrichtung aufeinander folgenden Polteilungen unterschiedlich positioniert innerhalb der jeweiligen Polteilung.

Durch diese Asymmetrie wird die Drehmomentwelligkeit des Motors reduziert. Denn bei der zum Stator relativen Drehbewegung des Rotors erzeugen die Rotornuten in Wirkverbindung mit den Statornuten winkelabhängig Oberwellen im Leitwert und somit auch im vom Motor erzeugten Drehmoment.

Trotz der Asymmetrie also der asymmetrischen Anordnung der Rotornuten in den nicht punktsymmetrisch zueinander liegenden Polteilungen, werden umlaufende Kräfte im Rotor vermieden und auch unterschiedliche induzierte Spannungen in den Stator-Wicklungssträngen eines jeweiligen Statorpols vermieden. Somit ist auch eine Statorwicklung mit parallel geschalteten Gruppen von Wicklungssträngen ermöglicht.

Erfindungsgemäß bewirkt also die Punktsymmetrie zusammen mit der ansonsten vorliegenden Asymmetrie eine verringerte Drehmomentwelligkeit ohne die genannten Nachteile.

Erfindungsgemäß sind also zumindest zwei unterschiedlich ausgeführte Pole, also unterschiedlich ausgeführte Polgeometrieen, vorhanden. Die Anzahl dieser unterschiedlichen Polgeometrieen entspricht einer ganzen Zahl aus dem Intervall von 1 bis p, wobei p die Polpaarzahl des Rotors ist.

Die Polpaarzahl ist somit ganzzahlig und größer als 1.

Der Rotor ist punktsymmetrisch zur Rotorachse.

In der Figur 1 ist für jede der beiden gezeigten Pole eine einzige Ausnehmung 2 als Flusssperre gezeigt. Die Anzahl der Flusssperren pro Pol ist bei anderen erfindungsgemäßen Ausführungsbeispielen größer. Dabei sind die Flusssperren in radialer Richtung hintereinander angereiht.

Unterschiedliche Pole dürfen dabei eine unterschiedliche Anzahl von Flusssperren aufweisen.

Der Rotor, insbesondere das jeweilige Einzelblech, darf zusätzliche Ausnehmungen aufweisen, die für jeden Pol gleichartig ausgeführt sind.

**Mittels der Ausnehmungen sind Flusssperren realisiert, die direkt oder über im Betrieb des Motors mit Nennstrom gesättigte Stegbereiche an der Oberfläche münden. Diese Mündungsbereiche sind in** **Figur 1** **idealisierend als Punkte dargestellt. Das Punktbild eines Umfangswinkelbereichs von 360°/(2p) ist durch eine Drehung von 90° nicht in Deckung bringbar mit dem Punktbild des benachbarten Umfangswinkelbereichs, der ebenfalls 360°/(2p) überdeckt.**

**Dabei grenzen beide Umfangswinkelbereiche an eine Symmetrieebene des Blechpakets an.**

**Das Punktbild der Mündungsbereiche, also Oberflächen-Mündungspunkte, in einer Polteilung bestimmt die Ausformung des jeweils zugehörigen Pols wesentlich. Der radial von der Rotoroberfläche weiter beabstandete Verlauf der jeweiligen Ausnehmung im Einzelblechteil ist für die Polform von vernachlässigbarer Bedeutung.**

**In** **Figur 2** **sind nochmals die Punktbilder der vier Umfangswinkelbereiche bei der vierpoligen Maschine nach** **Figur 1** **gezeigt.**

**In** **Figur 3** **sind die Punktbilder der sechs Umfangswinkelbereiche einer sechspoligen Maschine dargestellt, die drei Symmetrieebenen aufweist, welche als Symmetrielinien in der Schnittebene in** **Figur 2** **dargestellt sind.**

### Bezugszeichenliste

1 Einzelblechteil
2 Ausnehmung

## Patentansprüche

1. **Elektromaschine mit Rotor,**
**wobei der Rotor ein Blechpaket aus Einzelblechteilen (1) aufweist, wobei die Einzelblechteile (1) gestapelt angeordnet sind, in Rotorachsrichtung paketiert sind, stanzpaketiert sind,** wobei **an** jeweiligen **Einzelblechteil (1) Flusssperren ausgebildet sind, wobei die Flusssperren durch jeweilige Ausnehmungen (2) und/oder im Betrieb der Elektromaschine mit Nennstrom gesättigte Stegbereiche des Einzelblechteils (1) gebildet sind,**
**wobei die Flusssperren an der Oberfläche, radial äußeren Oberfläche, des Einzelblechteils (1) münden, nach radial außen, in den Luftspalt zwischen dem Rotor und einem diesen Rotor aufnehmenden Stator,**
**wobei der Schwerpunkt des jeweiligen zugehörigen Mündungsbereichs der jeweiligen Flusssperre als jeweiliger Oberflächen-Mündungspunkt bezeichenbar ist, wobei das Einzelblechteil (1) eine Punktsymmetrie zur Rotorachse aufweist,**
**wobei das Einzelblechteil (1) Symmetrieebenen aufweist, welche die Rotorachse enthalten,**
**wobei der Umfang aus (2 * p) Umfangswinkelbereichen zusammengesetzt ist, wobei jeder der Umfangswinkelbereiche einen Winkelbereich von 360° / (2 * p) überdeckt und zumindest einer der Umfangswinkelbereiche einseitig von einer der Symmetrieebenen berandet ist,**
**wobei die Anordnung der Oberflächen-Mündungspunkte eine Punktsymmetrie aufweist, dadurch gekennzeichnet, dass die Anordnung der Oberflächen-Mündungspunkte in einem der Umfangswinkelbereiche durch Drehung um die Rotorachse um einen Winkelbetrag von k * 360° / (2 * p) nicht in Deckung bringbar ist mit der Anordnung der Oberflächen-Mündungspunkte in einem anderen der Umfangswinkelbereiche,**
**wobei k eine ganze Zahl ist, die größer als 0 und kleiner als p ist, wobei p die Polpaarzahl ist.**

2. Elektromaschine **nach Anspruch 1,**
wobei der Rotor ein Blechpaket aus Einzelblechteilen (1) aufweist,
insbesondere wobei die Einzelblechteile (1) gestapelt angeordnet sind, insbesondere in Rotorachsrichtung paketiert sind, insbesondere stanzpaketiert sind,
**dadurch gekennzeichnet, dass**
am Einzelblechteil (1) in Umfangsrichtung hintereinander Pole, insbesondere Reluktanzpole, insbesondere 2*p Pole, ausgebildet sind, wobei jeder Pol einen Winkelbereich, also die Polteilung, überdeckt,
insbesondere der Winkelbereich 360° / (2*p) beträgt, wobei p die Anzahl der Polpaare ist und p eine ganze Zahl ist,
wobei das Einzelblechteil (1) in jedem der Winkelbereiche eine oder mehrere Ausnehmungen (2) aufweist, also jeder der Pole eine oder mehrere Ausnehmungen (2) aufweist,
wobei die oder die mehreren Ausnehmungen (2) der jeweils punktsymmetrisch zueinander angeordneten Pole punktsymmetrisch zueinander ausgeführt sind,
wobei die eine oder mehrere Ausnehmungen (2) eines Pols nur gleichartig geformt sind zur Ausnehmung (2) oder Ausnehmungen (2) des punktsymmetrisch zu dem Pol angeordneten Pols und/oder durch Drehung um einen Winkelbetrag nur in Deckung bringbar ist oder sind zur Ausnehmung (2) oder Ausnehmungen (2) des punktsymmetrisch zu dem Pol angeordneten Pols,
insbesondere also jeder Pol zu jedem anderen, nicht jeweils punktsymmetrisch angeordneten Pol unterschiedlich geformt ist, und/oder nicht durch Drehung um einen Winkelbetrag in Deckung bringbar sind mit der Ausnehmung (2) oder den Ausnehmungen (2) eines anderen nicht punktsymmetrisch angeordneten Pols.

3. Elektromaschine nach mindestens einem der vorangegangenen Ansprüche,
**dadurch gekennzeichnet, dass**
jeder Pol zumindest eine Flusssperre aufweist, die durch die Ausnehmung (2) gebildet ist, insbesondere wobei die Flusssperre eine m*agnetische Nut aufweist.*

4. Elektromaschine nach mindestens einem der vorangegangenen Ansprüche,
**dadurch gekennzeichnet, dass**
der von jedem Pol überdeckte Winkelbereich betragsgleich ist.

5. Elektromaschine nach mindestens einem der vorangegangenen Ansprüche,
**dadurch gekennzeichnet, dass**
jede der Ausnehmungen (2) in Umfangsrichtung bei einer erste Winkelposition einen kleinsten Radialabstand aufweist und bei einer in Umfangsrichtung zur ersten Winkelposition beabstandeten zweiten Winkelposition einen, insbesondere lokal, maximalen Radialabstand und bei einer entgegen der Umfangsrichtung zur ersten Winkelposition beabstandeten dritten Winkelposition einen, insbesondere lokal, maximalen Radialabstand,
wobei eine erste Winkeldifferenz dem Winkelabstand vom Beginn des Winkelbereichs zur zweiten Winkelposition entspricht, .
wobei eine zweite Winkeldifferenz dem Winkelabstand vom Ende des Winkelbereichs zur dritten Winkelposition entspricht.

6. Elektromaschine nach mindestens einem der vorangegangenen Ansprüche,
**dadurch gekennzeichnet, dass**
die erste Winkeldifferenz eines Pols stets unterschiedlich ist zur ersten Winkeldifferenz des in oder entgegen der Umfangsrichtung benachbarten Pols
und/oder dass
die zweite Winkeldifferenz eines Pols stets unterschiedlich ist zur zweiten Winkeldifferenz des in oder entgegen der Umfangsrichtung benachbarten Pols.

7. Elektromaschine nach mindestens einem der vorangegangenen Ansprüche,
**dadurch gekennzeichnet, dass**
in Umfangsrichtung vier Pole hintereinander angeordnet sind.

8. Elektromaschine nach mindestens einem der vorangegangenen Ansprüche,
**dadurch gekennzeichnet, dass**
das Blechpaket in axialer Richtung aus einer Anzahl m von Segmenten zusammengesetzt ist, wobei die Segmente gleichartig ausgeführt sind, aber jedes Segment zum axial benachbarten Segment einen in Umfangsrichtung vorgesehenen Verdrehwinkelbetrag von 360° / (m * n_S) aufweist,
wobei n_S die Anzahl der in Umfangsrichtung hintereinander angeordneten Statornuten ist.

9. Elektromaschine nach mindestens einem der vorangegangenen Ansprüche,
**dadurch gekennzeichnet, dass**
jeder Pol mehrere durch jeweilige Ausnehmung (2) gebildete Flusssperren aufweist.

10. Elektromaschine nach mindestens einem der vorangegangenen Ansprüche,
**dadurch gekennzeichnet, dass**
unterschiedliche Pole eine unterschiedliche Anzahl an Flusssperren und/oder von Ausnehmungen (2) aufweisen.

11. Elektromaschine nach mindestens einem der vorangegangenen Ansprüche,
**dadurch gekennzeichnet, dass**
die Pole eine oder mehrere weitere Ausnehmungen (2) aufweisen, die bei allen Polen gleichartig ausgebildet sind.

12. Elektromaschine nach mindestens einem der vorangegangenen Ansprüche,
**dadurch gekennzeichnet, dass**
der Stator der Elektromaschine eine in Umfangsrichtung hintereinander angeordnete und jeweils einzeln bewickelte Zähne aufweist.

## Claims

1. Electric machine having a rotor,
wherein the rotor has a laminated core comprising individual sheet parts (1),
wherein the individual sheet parts (1) are arranged in a stacked manner, are bundled in the rotor axial direction, are punch-bundled,
wherein at each individual sheet part (1) flux barriers are formed,
wherein the flux barriers are formed by respective cutouts (2) and/or in the operation of the electric machine with nominal-current-saturated web regions of the individual sheet part (1),
wherein the flux barriers open onto the surface, radially outer surface, of the individual sheet part (1), radially outwards, into the air gap between the rotor and a stator accommodating this rotor,
wherein the centre of gravity of the respective associated opening-out region of the respective flux barrier can be referred to as respective surface opening-out point,
wherein the individual sheet part (1) has a point symmetry with respect to the rotor axis,
wherein the individual sheet part (1) has planes of symmetry which contain the rotor axis,
wherein the circumference is composed of (2*p) circumferential angle ranges, wherein each of the circumferential angle ranges covers an angle range of 360°/(2*p) and at least one of the circumferential angle ranges is bounded on one side by one of the planes of symmetry,
wherein the arrangement of the surface opening-out points has a point symmetry,
**characterised in that** the arrangement of the surface opening-out points in one of the circumferential angle ranges by rotation about the rotor axis by an angle amount of k*360°/(2*p) cannot be brought into coincidence with the arrangement of the surface opening-out points in another of the circumferential angle ranges,
where k is an integer which is greater than 0 and less than p, where p is the number of pole pairs.

2. Electric machine according to claim 1,
wherein the rotor has a laminated core comprising individual sheet parts (1),
in particular wherein the individual sheet parts (1) are arranged in a stacked manner, in particular are bundled in the rotor axial direction, in particular are punch-bundled,
**characterised in that**
at the individual sheet part (1) poles, in particular reluctance poles, in particular 2*p poles, are formed in the circumferential direction one behind the other, wherein each pole covers an angle range, that is, the pole pitch,
in particular the angle range 360°/(2*p), where p is the number of pole pairs and p is an integer,
wherein the individual sheet part (1) in each of the angle ranges has one or more cutouts (2), that is, each of the poles has one or more cutouts (2),
wherein the one or more cutouts (2) of the poles arranged each point-symmetrically with respect to one another are configured point-symmetrically with respect to one another,
wherein the one or more cutouts (2) of a pole are only shaped in the same way to the cutout (2) or cutouts (2) of the pole arranged point-symmetrically with respect to the pole and/or by rotation about an angle amount can only be brought into coincidence with the cutout (2) or cutouts (2) of the pole arranged point-symmetrically with respect to the pole,
in particular, that is, each pole is differently shaped to each other pole not respectively point-symmetrically arranged, and/or by rotation about an angle amount cannot be brought into coincidence with the cutout (2) or cutouts (2) of another pole not arranged point-symmetrically.

3. Electric machine according to at least one of the preceding claims,
**characterised in that**
each pole has at least one flux barrier which is formed by the cutout (2),
in particular wherein the flux barrier has a magnetic groove.

4. Electric machine according to at least one of the preceding claims,
**characterised in that**
the angle range covered by each pole is of the same amount.

5. Electric machine according to at least one of the preceding claims,
**characterised in that**
each of the cutouts (2) has in the circumferential direction at a first angle position a smallest radial distance and at a second angle position spaced in the circumferential direction with respect to the first angle position a, in particular locally, maximum radial distance and at a third angle position spaced opposite the circumferential direction with respect to the first angle position a, in particular locally, maximum radial distance,
wherein a first angle difference corresponds to the angle distance from the beginning of the angle range to the second angle position,
wherein a second angle difference corresponds to the angle distance from the end of the angle range to the third angle position.

6. Electric machine according to at least one of the preceding claims,
**characterised in that**
the first angle difference of one pole is always different from the first angle difference of the adjacent pole in or opposite the circumferential direction,
and/or **in that**
the second angle difference of one pole is always different from the second angle difference of the adjacent pole in or opposite the circumferential direction.

7. Electric machine according to at least one of the preceding claims,
**characterised in that**
four poles are arranged one behind the other in the circumferential direction.

8. Electric machine according to at least one of the preceding claims,
**characterised in that**
the laminated core is composed, in the axial direction, of a number m of segments, wherein the segments are configured in the same way, but each segment has a rotation angle amount of 360°/(m*n_S), provided in the circumferential direction, with respect to the axially adjacent segment,
wherein n_S is the number of the stator grooves arranged one behind the other in the circumferential direction.

9. Electric machine according to at least one of the preceding claims,
**characterised in that**
each pole has a plurality of flux barriers formed by respective cutout (2).

10. Electric machine according to at least one of the preceding claims,
**characterised in that**
different poles have a different number of flux barriers and/or of cutouts (2).

11. Electric machine according to at least one of the preceding claims,
**characterised in that**
the poles have one or more further cutouts (2) which are formed in the same way at all poles.

12. Electric machine according to at least one of the preceding claims,
**characterised in that**
the stator of the electric machine has teeth arranged one behind the other in the circumferential direction and each individually wound.

## Revendications

1. Machine électrique à rotor,
sachant que le rotor présente un paquet de tôles constitué de tôles individuelles (1),
sachant que les tôles individuelles (1) sont disposées en empilement, sont groupées en paquet dans la direction de l'axe du rotor et sont boutonnées,
sachant que des barrières de flux sont formées sur la tôle individuelle respective (1),
sachant que les barrières de flux sont formées par des évidements respectifs (2) et/ou par des régions de branches de la tôle individuelle (1) qui sont saturées au courant nominal pendant le fonctionnement de la machine électrique,
sachant que les barrières de flux débouchent radialement vers l'extérieur sur la surface, la surface radialement extérieure, de la tôle individuelle (1), dans l'entrefer entre le rotor et un stator recevant ce rotor,
sachant que le centre de gravité de la région de débouché correspondante respective de la barrière de flux respective peut être désigné comme étant le point de débouché de surface respectif,
sachant que la tôle individuelle (1) présente une symétrie ponctuelle par rapport à l'axe du rotor,
sachant que la tôle individuelle (1) présente des plans de symétrie qui contiennent l'axe du rotor,
sachant que la circonférence est composée de (2 * p) secteurs d'angle inscrit, sachant que chacun des secteurs d'angle inscrit couvre une plage angulaire de 360° / (2 * p) et qu'au moins un des secteurs d'angle inscrit est bordé sur un côté par un des plans de symétrie,
sachant que la disposition des points de débouché de surface présente une symétrie ponctuelle,
**caractérisée en ce que** la disposition des points de débouché de surface dans un des secteurs d'angle inscrit ne peut pas être amenée, par rotation autour de l'axe du rotor d'une valeur d'angle de k * 360° / (2 *p), en coïncidence avec la disposition des points de débouché de surface dans un autre des secteurs d'angle inscrit,
sachant que k est un nombre entier qui est supérieur à 0 et inférieur à p, sachant que p est le nombre de paires de pôles.

2. Machine électrique selon la revendication 1,
sachant que le rotor présente un paquet de tôles constitué de tôles individuelles (1), sachant en particulier que les tôles individuelles (1) sont disposées en empilement, en particulier sont groupées en paquet dans la direction de l'axe du rotor, en particulier sont boutonnées,
**caractérisée en ce que** des pôles, en particulier des pôles à réluctance, en particulier 2*p pôles, sont configurés les uns à la suite des autres dans le sens circonférentiel sur la tôle individuelle (1), sachant que chaque pôle couvre une plage angulaire, donc le pas polaire,
en particulier la plage angulaire est égale à 360° / (2*p), sachant que p est le nombre de paires de pôles et que p est un nombre entier,
sachant que la tôle individuelle (1) présente dans chacune des plages angulaires un ou plusieurs évidements (2), donc chacun des pôles présente un ou plusieurs évidements (2),
sachant que le ou les évidements (2) des pôles respectivement disposés en symétrie ponctuelle les uns par rapport aux autres sont réalisés en symétrie ponctuelle les uns par rapport aux autres,
sachant que le ou les évidements (2) d'un pôle sont réalisés uniquement de forme identique à l'évidement (2) ou les évidements (2) du pôle disposé en symétrie ponctuelle par rapport au pôle, et/ou ne peut ou ne peuvent être amenés, par rotation d'une valeur d'angle, en coïncidence qu'avec l'évidement (2) ou les évidements (2) du pôle disposé en symétrie ponctuelle par rapport au pôle,
en particulier donc chaque pôle est réalisé de forme différente par rapport à chaque autre pôle, non respectivement disposé en symétrie ponctuelle, et/ou ne peut pas être amené, par rotation d'une valeur d'angle, en coïncidence avec l'évidement (2) ou les évidements (2) d'un autre pôle non disposé en symétrie ponctuelle.

3. Machine électrique selon au moins une des revendications précédentes,
**caractérisée en ce que** chaque pôle présente au moins une barrière de flux qui est formée par l'évidement (2),
sachant en particulier que la barrière de flux présente une rainure magnétique.

4. Machine électrique selon au moins une des revendications précédentes,
**caractérisée en ce que** la plage angulaire couverte par chaque pôle est d'un montant identique.

5. Machine électrique selon au moins une des revendications précédentes,
**caractérisée en ce que** chacun des évidements (2) présente à une première position angulaire dans le sens circonférentiel une distance radiale minimale et à une deuxième position angulaire, distante de la première position angulaire dans le sens circonférentiel, une distance radiale maximale, en particulier localement, et à une troisième position angulaire, distante de la première position angulaire dans le sens opposé au sens circonférentiel, une distance radiale maximale, en particulier localement,
sachant qu'une première différence angulaire correspond à la distance angulaire depuis le début de la plage angulaire jusqu'à la deuxième position angulaire,
sachant qu'une deuxième différence angulaire correspond à la distance angulaire depuis la fin de la plage angulaire jusqu'à la troisième position angulaire.

6. Machine électrique selon au moins une des revendications précédentes,
**caractérisée en ce que** la première différence angulaire d'un pôle est toujours différente de la première différence angulaire du pôle voisin dans le sens circonférentiel ou dans le sens opposé,
et/ou **en ce que** la deuxième différence angulaire d'un pôle est toujours différente de la deuxième différence angulaire du pôle voisin dans le sens circonférentiel ou dans le sens opposé.

7. Machine électrique selon au moins une des revendications précédentes,
**caractérisée en ce que** quatre pôles sont disposés les uns à la suite des autres dans le sens circonférentiel.

8. Machine électrique selon au moins une des revendications précédentes,
**caractérisée en ce que** le paquet de tôles est composé dans le sens axial d'un nombre m de segments, sachant que les segments sont réalisés de manière identique, mais que chaque segment présente par rapport au segment axialement voisin une valeur d'angle de rotation, prévue dans le sens circonférentiel, de 360° / (m * n_S),
sachant que n_S est le nombre de rainures de stator disposées les unes à la suite des autres dans le sens circonférentiel.

9. Machine électrique selon au moins une des revendications précédentes,
**caractérisée en ce que** chaque pôle présente plusieurs barrières de flux formées par des évidements respectifs (2).

10. Machine électrique selon au moins une des revendications précédentes, **caractérisée en ce que** des pôles différents présentent un nombre différent de barrières de flux et/ou d'évidements (2).

11. Machine électrique selon au moins une des revendications précédentes, **caractérisée en ce que** les pôles présentent un ou plusieurs autres évidements (2) qui sont réalisés identiques pour tous les pôles.

12. Machine électrique selon au moins une des revendications précédentes, **caractérisée en ce que** le stator de la machine électrique présente des dents disposées les unes à la suite des autres dans le sens circonférentiel et respectivement individuellement bobinées.
